# EUROPÄISCHE PATENTANMELDUNG

(11) **EP 2 509 079 A2**
(43) Veröffentlichungstag der Anmeldung: **10.10.2012**
(21) Anmeldenummer: 12000908.9
(22) Anmeldetag: 13.02.2012
(51) Int. Cl.: G21C 19/10, G21C 19/20, G21C 19/32, G21D 1/02, B66C 1/10, B66F 7/00, B66F 9/18

(54) **Traverse für ein Hubsystem, Hubsystem in einer kerntechnischenen Anlage sowie Betriebsverfahren für eine kerntechnische Anlage unter Verwendung einer derartigen Traverse**

(30) Priorität: 07.04.2011 DE 102011016390
(71) Anmelder: Areva NP GmbH, 91052 Erlangen (DE)
(72) Erfinder: Scheler, Reiner, 91301 Forchheim (DE); Beck, Jens, 90587 Veitsbronn (DE); Lenk, Stefan, 90765 Fürth (DE)
(74) Vertreter: Tergau & Walkenhorst

(57) **Zusammenfassung**

Eine Traverse (1) ist als Anschlagshilfsmittel zur Handhabung am Reaktordruckbehälter-Deckel eines Kernreaktors vorgesehen. Für eine möglichst universelle Einsetzbarkeit besitzt die Traverse (1) einen quaderförmigem Zentralkörper (2), mit einer Mehrzahl von mit dem Zentralkörper (2) verbundenen Halteelementen (3), mit einer Aussparung (8) im mittleren Bereich der Oberseite des Zentralkörpers (2) und mit einem in den Zentralkörper (2) integrierten Tragerahmen (10), wobei der Tragerahmen planparallel zu einer zur Hochachse (z) des Zentralkörpers (2) orthogonalen Ebene an einer festen Position (z₀) bezüglich der Hochachse (z) in dem Zentralkörper (2) angeordnet ist und bezüglich der Längsachse (x) des Zentralkörpers (2) um eine mittlere Position (x₀) längsverschiebbar, und bezüglich der Querachse (y) des Zentralkörpers (2) um eine mittlere Position (y₀) querverschiebbar gelagert ist.

## Beschreibung

Die Erfindung betrifft eine Traverse für ein Hubsystem und ein dazugehöriges Hubsystem in einer kerntechnischen Anlage. Sie betrifft ferner ein Betriebsverfahren für eine kerntechnische Anlage unter Verwendung einer derartigen Traverse.

In einer kerntechnischen Anlage, beispielsweise in einer Kernkraftwerksanlage, ist ein Hubsystem erforderlich, um im Bedarfsfall den Deckel des Reaktordruckbehälters, beispielsweise bei Montage- und/oder Reparaturarbeiten, anzuheben und zu transportieren. Da der Reaktordruckbehälter einer kerntechnischen Anlage innerhalb eines abgeschirmten Strahlenschutzbereiches, dem so genannten Containment, lokalisiert ist, gelten besondere Sicherheits- und Prüfvorschriften für die verwendeten Werkzeuge und Instandhaltungsinstrumente, zu welchen auch Hubsysteme zu zählen sind. Insbesondere für Werkzeuge und Instandhaltungsinstrumente älterer Bauart ist ein erhöhter Prüfaufwand erforderlich.

Die Durchführung von Montage- und Reparaturarbeiten innerhalb eines Containments einer kerntechnischen Anlage sind komplexer als vergleichbare Arbeiten in anderen Bereichen, nicht nur aufgrund besonderer Sicherheits- und Prüfvorschriften bezüglich der verwendeten Geräte, sowie besonderer Sicherheitsvorkehrungen in Bezug auf die Arbeitsprozesse an sich, sondern auch aufgrund der Randbedingungen, die durch die dort gegebenen beengten räumlichen Verhältnisse gesetzt werden. So müssen durch die Beschränkung des Operationsraumes eine Reihe von Aufgaben, die in offenen Bereichen z. B. in einem einzigen Arbeitsschritt durchgeführt werden könnten, in mehrere Arbeitsschritte zergliedert werden und/oder mit Verlagerungsprozessen kombiniert durchgeführt werden.

Arbeiten, bei welchen der Deckel des Reaktordruckbehälters (RDB) angehoben wird, sind besonders aufwendig. Ein hierfür verwendetes Hubsystem umfasst in der Regel ein Verbindungselement oder Anschlagshilfsmittel in der Form eines Querbalkens, eine so genannte Traverse, über welche die Hubkraft eines Krans von dem Kranhaken auf die Hublastpunkte des Reaktordruckbehälters übertragen werden kann. Die Lastübertragungseigenschaften der Traverse sind somit abhängig von der spezifischen räumlichen Verteilung der Lastpunkte und von den spezifischen Lasten, die über die jeweiligen Lastpunkte anzuheben und zu transportieren sind, und sind somit in Abhängigkeit des Reaktordruckbehälters variabel.

Eine erste Aufgabe der Erfindung ist es, eine Traverse für ein Hubsystem anzugeben, mit der der Komplexitätsgrad für Hubarbeiten am Reaktordruckbehälter einer kerntechnischen Anlage möglichst begrenzt bleibt, und die möglichst universell einsetzbar ist.

Eine zweite Aufgabe der Erfindung ist es, ein Hubsystem in einer kerntechnischen Anlage anzugeben, mit welchem Hubarbeiten am Reaktordruckbehälter möglichst effizient durchgeführt werden können.

Schließlich soll ein hinsichtlich der Anschaffungs-, Prüf- und Wartungskosten für Geräte besonders günstiges Betriebsverfahren für eine kerntechnische Anlage unter Verwendung einer derartigen Traverse bzw. eines derartigen Hubsystems angegeben werden.

Die erste Aufgabe wird erfindungsgemäß durch die Merkmale des Anspruchs 1 gelöst. Danach wird eine Traverse vorgeschlagen mit einem quaderförmigem Zentralkörper, mit einer Mehrzahl von mit dem Zentralkörper verbundenen Halteelementen, mit einer Aussparung im mittleren Bereich der Oberseite des Zentralkörpers und mit einem in den Zentralkörper integrierten Tragerahmen, wobei der Tragerahmen planparallel zu einer zur Hochachse des Zentralkörpers orthogonalen Ebene an einer festen Position bezüglich der Hochachse in dem Zentralkörper angeordnet ist, bezüglich der Längsachse des Zentralkörpers um eine mittlere Position längsverschiebbar gelagert ist, und bezüglich der Querachse des Zentralkörpers um eine mittlere Position querverschiebbar gelagert ist.

Dabei ist vorteilhafterweise die mittlere Position bezüglich der Längsachse und die mittlere Position bezüglich der der Querachse im Bereich der Projektionen des Mittelpunktes der Aussparung auf die Längsachse bzw. auf die Querachse angeordnet, wobei der Tragerahmen zur Ausbildung einer festen Verbindung mit einer Hebevorrichtung mit Haltelöchern versehen ist, welche Hebevorrichtung zur Einführung in die Aussparung entlang der Hochachse vorgesehen ist.

Die Erfindung geht von der Überlegung aus, eine Hebetraverse in möglichst platzsparender und kompakter Ausführung zu realisieren. Dies ist insbesondere durch die Aussparung gewährleistet, in welche die Hebevorrichtung eingeführt werden kann. Eine solche Hebevorrichtung umfasst insbesondere eine Halterung für einen Kranhaken. Bei der Einführung eines Kranhakens in die mit der Hebetraverse verbundene Halterung ist der Kranhaken somit in der Aussparung der Hebetraverse teilversenkt. Dadurch wird die vertikale Ausdehnung der Hebevorrichtung mit dem Kranhaken so weit wie möglich begrenzt, was für einen Einsatz bei begrenzten Platzverhältnissen - wie sie insbesondere innerhalb des Containments einer kerntechnischen Anlage vorherrschen - vorteilhaft ist.

Mit Hilfe des Tragerahmens wird die Hebevorrichtung mit der Traverse mechanisch gekoppelt. Durch die Verstellbarkeit des Tragerahmens bezüglich der Längsachse und bezüglich der Querachse um die mittlere Position des Zentralkörpers der Traverse kann die an der Traverse angreifende Last in Bezug auf die Hebevorrichtung bezüglich der Längsachse und bezüglich der Querachse verrückt werden, so dass die Lage des Schwerpunktes der Last bezüglich der Hebevorrichtung verstellt werden kann. Mit einer solchen integrierten zweiachsigen Schwerpunktverstellung ist die Traverse universell einsetzbar bei variablen Lastverteilungen unter variablen räumlichen Randbedingungen. Durch die Verstellbarkeit des Schwerpunktes entfällt zudem die Notwendigkeit, oder ist die Notwendigkeit in geringerem Maße gegeben, Ausgleichsgewichte verwenden zu müssen, um ggf. die Lage des Schwerpunktes einer Lastverteilung in geeigneter Weise zu kalibrieren.

In einer bevorzugten Ausführung der Traverse ist der Tragerahmen bis um eine maximale Längsverschiebung aus der mittleren Position der Längsachse des Zentralkörpers und bis um eine maximale Querverschiebung aus der mittleren Position der Querachse des Zentralkörpers verschiebbar gelagert. Die maximal möglichen Verschiebungen sind vorzugsweise so gewählt und vorgegeben, dass die Traverse für eine möglichst unterschiedliche Anzahl von Lastverteilungen einsetzbar ist. Durch eine Begrenzung der Längs- und Querverschiebungen bleibt die Dimensionierung des Zentralkörpers der Traverse beschränkt und vorzugsweise von derselben Größenordnung wie der in den Zentralkörper integrierte Tragerahmen. Damit ist eine möglichst kompakte Realisierung der Traverse möglich. Mittels einer zweckmäßigen Arretierung, die eine Verschiebung über die maximalen Verschiebungen bezüglich der Längsachse und/oder bezüglich der Querachse hinaus verhindert, ist die Traverse in zweckmäßiger Weise stabilisiert.

Zweckdienlicherweise sind an den Seitenverstrebungen des Tragerahmens jeweils parallel zur Längsachse und parallel zur Querachse eine Anzahl von Führungsschienen ausgebildet, in welcher Führungsschiene mindestens ein Führungsschlitten verschiebbar gelagert ist. Die Verbindung des Führungsschlittens mit der zugehörigen Führungsschiene kann kontakt- und formschlüssig gegeben sein, wobei eine Verschiebung als gleitende Verschiebung ausgebildet ist, oder kann kontaktschlüssig gegeben sein, wobei eine Verschiebung über Walzen, Rollen oder Lager erfolgt. In einer alternativen Ausführungsvariante der Traverse ist auch eine feste Verbindung des oder jedes Führungsschlittens mit dem Tragerahmen möglich, wobei der Tragerahmen dann zu der jeweils zugehörigen Führungsschiene verschiebbar gelagert ist.

Die im vorangegangen Absatz dargelegte Ausführungsvariante der Traverse ist vorzugsweise dahingehend weitergebildet, dass an jeder Seitenverstrebung des Tragerahmens genau eine Führungsschiene ausgebildet ist, wobei die parallel zur Längsachse / Querachse angeordneten Führungsschienen paarweise einander entsprechen und bezüglich der Querachse / Längsachse zueinander gegenüberliegend angeordnet sind, und wobei in jeder Führungsschiene ein Führungsschlitten verschiebbar gelagert ist. Die maximale Längs- und Querverschiebung des Tragerahmens aus der mittleren Position sind passenderweise jeweils im Wesentlichen durch die Hälfte der Differenz der Längen aus der Führungsschiene und dem darin verschiebbaren Führungsschlitten gegeben, die parallel zu der Längs- bzw. Querachse angeordnet sind: Fällt eine Endseite eines Führungsschlittens mit einer Endseite der dazugehörigen Führungsschiene räumlich zusammen, so befindet sich der Führungsschlitten im Anschlag, sofern die Verschiebung des Führungsschlittens in der Führungsschiene als gleitende Verbindung ausgebildet ist. Ist die Verbindung über Walzen, Rollen oder Lager gegeben, so ist eine geringfügige Abweichung zwischen der Endposition des Führungsschlittens bezüglich der Führungsschiene und der Position, bei der die Endseite des Führungsschlittens mit der Endseite der dazugehörigen Führungsschiene räumlich zusammenfällt, möglich. In der Regel ist die Geringfügigkeit dieser Abweichung dadurch definiert, als das sie um mindestens eine Größenordnung kleiner ist als die Länge des Führungsschlittens und/oder die Länge der Führungsschiene.

In einer zweckmäßigen Weiterbildung der Traverse ist jeder Führungsschlitten mit Hilfe einer Welle oder einer Schubstange mit dem Zentralkörper mechanisch gekoppelt, wobei jede Welle in einem Führungsrohr eines Lagerblockes verschiebbar gelagert ist, und jede Welle orthogonal zu dem dazugehörigen Führungsschlitten angeordnet ist. Auf diese Weise wird eine Verschiebung des Tragerahmens bezüglich der Längsachse / Querachse dadurch angesteuert, dass mindestens eine der Wellen, die parallel zur Längsachse / Querachse angeordnet ist, gezogen oder geschoben wird und dabei Zug bzw. Druck auf den mit der Welle verbundenen Führungsschlitten, der parallel zur Querachse / Längsachse angeordnet ist, ausgeübt wird.

Weiterhin sind vorzugsweise mindestens eine Welle oder Schubstange bezüglich der Längsachse und mindestens eine Welle oder Schubstange bezüglich der Querachse mit jeweils einem Aktuator zur Ausbildung einer Verschiebung verbunden. Geeigneterweise umfasst ein oder jeder Aktuator einen oder mehrere Stellmotoren, welche sensorgesteuert sind und/oder von einer Steuereinheit aus angesteuert werden können.

In einer geeigneten Ausführungsvariante der Traverse ist eine Anzahl von Arretierungselementen vorgesehen, um den Tragerahmen in einer Position bezüglich der Längsachse und in einer Position bezüglich der Querachse innerhalb des Zentralkörpers stabil zu arretieren. Auf diese Weise kann der Tragerahmen derart mit dem Zentralkörper verbunden werden, dass schwere Lasten, die von dem Hebesystem über den Tragerahmen auf den Zentralkörper der Traverse übertragen werden, nicht zuerst über die in den zugehörigen Lagerblöcken geführten Wellen übertragen werden: Damit die jeweiligen Wellen in den Lagerblöcken bezüglich der Längsachse und der Querachse verschiebbar sind, und mithin der Tragerahmen innerhalb des Zentralkörpers, muss für den Tragerahmen ein geringfügiges Spiel um seine feste Position bezüglich der Hochachse des Zentralkörpers zugelassen werden. Bei der Übertragung einer Last werden dadurch jedoch zunächst die Wellen belastet, bevor der Tragerahmen insgesamt in dem Gehäuse des Zentralkörpers abgefangen und gehalten wird. Um eine Überlastung der Wellen zu vermeiden, kann in einer vorab angewählten und dann angesteuerten Position des Tragerahmens bezüglich der Längs- und Querachse in Bezug auf den Zentralkörper durch derartige Arretierungselemente das Spiel des Tragerahmens um seine feste Position entlang der Hochachse eingeschränkt und auf Null gebracht werden, so dass eine vertikale Einklemmung des Tragerahmens in dem Zentralkörper erfolgt. Auf diese Weise kann eine für Kraftübertragungen geeignete, flächenbezogene Stabilisierung erreicht werden, und die Wellen sind entlastet.

Zweckdienlicherweise ist für das oder jedes Arretierungselement ein Aktuator zur Ansteuerung des oder jeden Arretierungselementes vorgesehen.

In einer bevorzugten Ausgestaltung der Traverse sind eine Anzahl der Halteelemente der Traverse als klappbare Tragarme ausgebildet. Damit kann die Traverse in den Situationen, in denen sie nicht zur Lastübertragung eingesetzt wird - beispielsweise zu Transportzwecken - eine noch kompaktere und somit Platz sparendere Form annehmen. Eine platzsparende Formgebung ist insbesondere zur Ein- und Ausschleusung in das bzw. aus dem Containment nützlich. Eine mögliche Anwendung betrifft beispielsweise eine Traverse, die für Hubarbeiten in mehreren Containments einer mehrere Reaktorblöcke besitzenden kerntechnischen Anlage zur Verwendung vorgesehen ist.

Darüber hinausgehend ist zweckdienlicherweise jeder Tragarm mit einem Gelenkbolzen mit dem Zentralkörper verbunden, und ist jeder Tragarm bezüglich dem Zentralkörper jeweils zwischen einer minimalen Ausfahrposition und einer maximalen Ausfahrposition drehbar gelagert.

Vorzugsweise ist mindestens ein Halteelement mit dem Zentralkörper endseitig fest verbunden. So stellt beispielsweise eine Dreipunktform eine zweckmäßige Ausgestaltung einer Traverse dar, mit zwei klappbaren und arretierbaren, einander gegenüberliegenden Tragarmen, sowie mit einem Halteelement als festes Verbindungselement an der Endseite des Zentralkörpers.

Die zweite der eingangs genannten Aufgaben wird erfindungsgemäß durch die Merkmale des Anspruchs 12 gelöst. Danach ist ein Hubsystem in einer kerntechnischen Anlage vorgesehen, mit einer Traverse der oben genannten Art.

In Bezug auf das Betriebsverfahren wird die eingangs genannte Aufgabe erfindungsgemäß gelöst, indem eine Traverse der oben genannten Art bedarfsweise zwischen zwei jeweils mit einer Sicherheitshülle (Containment) ausgestatteten Blöcken eines Mehrblock-Kernkraftwerks hin- und hertransportiert und dort jeweils für Hubvorgänge eingesetzt wird, wobei eine Aus- und Einschleusung der Traverse durch die jeweilige Sicherheitshülle hindurch erfolgt.

Dabei erfolgt die Aus- und Einschleusung der Traverse bevorzugt in einem möglichst kompakten Zustand mit in eine Transportposition geklappten bzw. geschwenkten, seitlich möglichst wenig Platz beanspruchenden Tragarmen.

Vorteilhafterweise wird die Traverse während des Aus- und Einschleusens und während des Transports zwischen den Reaktorblöcken in einem strahlungsabschirmenden Transportbehälter gelagert.

Bevorzugt dient die Traverse als Anschlagshilfsmittel zur Handhabung eines Reaktordruckbehälter-Deckels bei wartungsbezogenen Hubvorgängen. Da sich in der Regel die Reaktordruckbehälter-Deckel in den verschiedenen Blöcken des Kraftwerks hinsichtlich Größe, Gestalt und Gewichtsverteilung unterscheiden, wird zweckmäßigerweise nach dem Einschleusen der Traverse und vor der erneuten Inbetriebnahme im aktuellen Block der Schwerpunkt der Traverse über die integrierte Verstellmechanik an die neue Situation angepasst, sprich auf den jeweiligen Deckel eingestellt.

Die mit der Erfindung erzielten Vorteile bestehen somit insbesondere darin, das eine zur Handhabung des Reaktordruckbehälter-Deckels vorgesehene transportable Traverse mit klappbaren oder schwenkbaren Trägern in eine platzsparende Transportkonfiguration gebracht und beispielsweise in einem Transportbehälter (Container) transportiert sowie in das Containment eines anderen Kraftwerksblocks eingeschleust und dort verwendet werden kann. Durch eine versenkte oder versenkbare Anordnung der Kranhaken-Aufnahme lassen sich die Platzerfordernisse noch weiter optimieren. Auf die unterschiedlichen Schwerpunkte der verschiedenen Reaktordruckbehälter-Deckel kann die Traverse über eine integrierte Zweiachs-Schwerpunktverstellung angepasst werden. Dieses Konzept ist insbesondere bei Zwei- oder Mehrblockanlagen von Interesse, da wegen der in aller Regel nicht zeitgleich erfolgenden Wartungsarbeiten an den Reaktordruckbehälter-Deckeln nur eine einzige Hubtraverse angeschafft werden muss, die bei Bedarf zwischen den Blöcken transportiert, ggf. außerhalb des Containments gelagert, und deren Schwerpunkt in einfacher Weise auf den jeweiligen Deckel eingestellt werden kann. Gegenüber einer ebenfalls denkbaren, zum Transport in Einzelteile zerlegbaren Variante hat die Ausführung mit den schwenkbaren Tragarmen den Vorteil, dass die Abnahmeprüfungen gemäß den einschlägigen kerntechnischen Sicherheitsvorschriften einfacher und schneller durchzuführen sind.

Nachfolgend wird ein Ausführungsbeispiel einer erfindungsgemäßen Traverse anhand einer Zeichnung erläutert.

Dabei zeigen jeweils in schematischer Ansicht:
- FIG. 1: eine Traverse in einer Ansicht von oben,
- FIG. 2: einen Teilausschnitt der Traverse nach FIG. 1 mit einem in einen Zentralkörper integrierten, verschiebbaren Tragerahmen,
- FIG. 3: denselben Ausschnitt der Traverse, mit einem gegenüber der Position in FIG. 2 verschobenen Tragerahmen,
- FIG. 4: eine perspektivische Ansicht der Traverse, links mit ausgeklappten Tragarmen, rechts mit hochgeklappten Tragarmen, und
- FIG. 5: eine stark vereinfachte Darstellung von Verfahrensschritten bei der Benutzung der Traverse in einer Mehrblock-Kernkraftanlage.

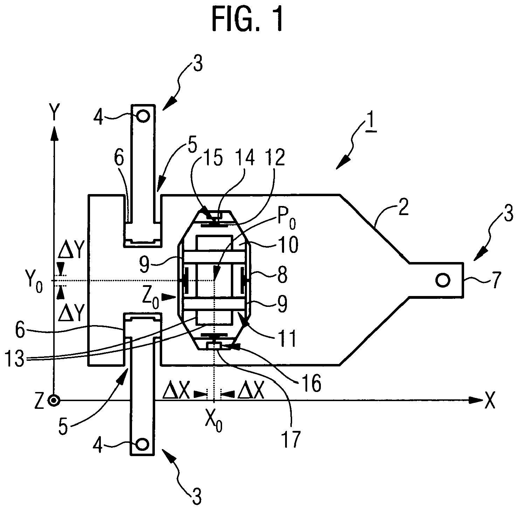

Einander entsprechende Teile in FIG. 1 bis FIG. 5 sind mit den gleichen Bezugszeichen versehen.

FIG. 1 zeigt eine Traverse 1 in einer Ansicht von oben. Die Traverse 1 umfasst einen im Wesentlichen quaderförmigen Zentralkörper 2 mit Halteelementen 3. Zwei der Halteelemente 3 sind als klappbare Tragarme 4 ausgebildet, welche Tragarme 4 im vorderen Bereich der Traverse 1 in Seitenaussparungen 5 des Zentralkörpers 2 angeordnet sind und mittels Gelenkbolzen 6 mit dem Zentralkörper 2 verbunden sind. Ein drittes Halteelement 3 ist als mit dem Zentralkörper 2 fest verbundenes Verbindungselement 7 ausgebildet. Im mittleren Bereich auf der Oberseite des Zentralkörpers 2 ist eine zentrale Aussparung 8 angeordnet, die den Mittelpunkt P₀ bezüglich der Längsachse x und der Querachse y aufweist. Die Aussparung 8 ist nicht durchgängig als Loch im Zentralkörper 2 ausgebildet, sondern stellt bezüglich der Hochachse z eine Vertiefung im Zentralkörper 2 dar, und ist zur Aufnahme einer Hebevorrichtung 9 ausgebildet, welche Hebevorrichtung 9 zur Einführung parallel zur Hochachse z in den Zentralkörper 2 vorgesehen ist.

Die Hebevorrichtung 9 ist mit einem in den Zentralkörper 2 integrierten Tragerahmen 10 verbunden, wobei für die Verbindung in dem Tragerahmen 10 Haltelöcher 11 vorgesehen sind. Die Hebevorrichtung 9 dient zur Verbindung mit einem (hier nicht näher dargestellten) Kranhaken, der bei einer Verbindung mit der Hebevorrichtung 9 in der zentralen Aussparung 8 bezüglich der Hochachse z teilversenkt ist. Eine an der Hebevorrichtung 9 anliegende Kraft parallel zur positiven Richtung der Hochachse z (in Richtung zum Beobachter) wird über den Tragerahmen 10 auf den Zentralkörper 2 übertragen, und von dort aus weiter über die Haltelemente 3 auf eine an den Haltelementen 3 angehängte Last.

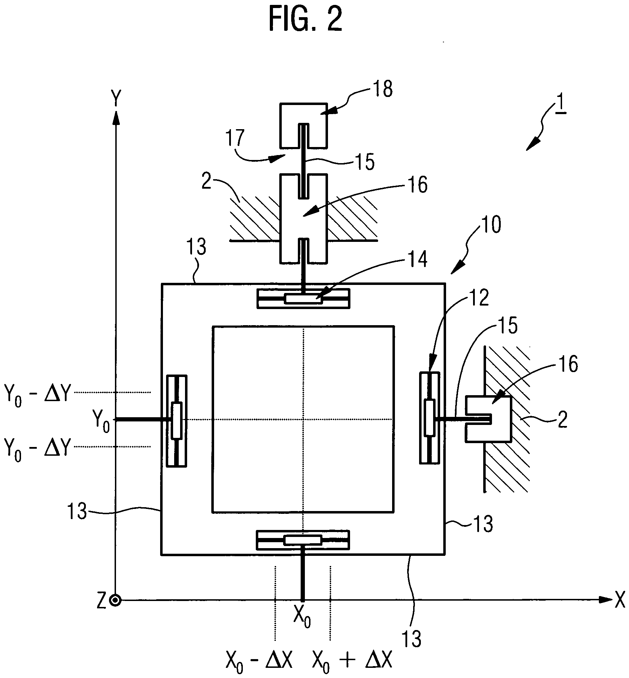

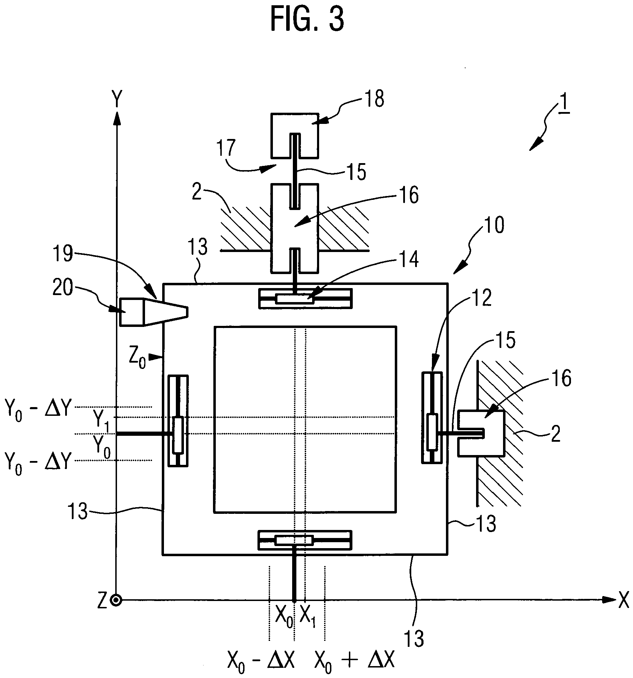

Der Tragerahmen 10 liegt bezüglich der Hochachse z an einer konstanten Position z₀ innerhalb des Zentralkörpers 2, und ist bezüglich der Längsachse x und bezüglich der Querachse y verschiebbar gelagert, so dass die mittlere Position x₁ des Tragerahmens 10 bezüglich der Längsachse x bis um den Betrag einer maximalen Längsverschiebung Δx von der mittleren Position x₀ abweichen kann, und so dass die mittlere Position y₁ des Tragerahmens 10 bezüglich der Querachse y bis um den Betrag einer maximalen Querverschiebung Δy von der mittleren Position y₀ abweichen kann (vgl. FIG. 2 und FIG. 3).

Auf diese Weise kann der Schwerpunkt einer Last bezüglich des Zentralkörpers 2 so rejustiert werden, dass die Lage des Schwerpunktes bezüglich der Längsachse x und bezüglich der Querachse y mit der mittleren Position x₀ bzw. der mittleren Position y₀ im Wesentlichen übereinstimmt (d. h. bis auf Abweichungen, die innerhalb von vorgegebenen Toleranzgrenzen liegen). Die mittleren Positionen x₀ bzw. y₀ stimmen mit den Projektionen des Mittelpunktes P₀ auf die Längsachse x bzw. auf die Querachse y im Wesentlichen überein. Die verschiebbare Lagerung des Tragerahmens 10 relativ zum Zentralkörper 2 ist über jeweils eine Führungsschiene 12 implementiert, wobei die Führungsschiene 12 an jeweils einer Seitenverstrebung 13 des Tragerahmens 10 oberseitig angeordnet ist. In jeder Führungsschiene 12 ist ein Führungsschlitten 14 verschiebbar gelagert. Jeder Führungsschlitten 14 ist mit jeweils einer als Antriebswelle oder Schubstange wirksamen Welle 15 verbunden, wobei die Welle 15 orthogonal zu dem zugehörigen Führungsschlitten 14 angeordnet ist und auf den Führungsschlitten 14 einen Zug oder Druck ausüben kann, und wobei die Welle 15 in einem in einem Lagerblock 16 angeordneten Führungsrohr 17 verschiebbar gelagert ist (vgl. FIG. 2). Jeder Lagerblock 16 ist mit dem Zentralkörper 2 fest verbunden.

FIG. 2 zeigt einen Teilausschnitt der Traverse 1 gemäß FIG. 1 mit einem in den Zentralkörper 2 integrierten, bzgl. der Längsachse x und bzgl. der Querachse y verschiebbaren Tragerahmen 10. Jeweils eine Führungsschiene 12 ist an jeweils einer Seitenverstrebung 13 des Tragerahmens 10 angeordnet, wobei in jeder Führungsschiene 12 ein Führungsschlitten 14 linear verschiebbar gelagert ist. Jeder Führungsschlitten 14 ist mit einer orthogonal zu dem Führungsschlitten 14 angeordneten Welle 15 verbunden, welche Welle 15 in einem in einem Lagerblock 16 angeordneten Führungsrohr 17 verschiebbar gelagert ist. Zumindest eine parallel zur Längsachse x angeordnete Welle 15 und zumindest eine parallel zur Querachse y angeordnete Welle 15 kann mittels jeweils eines Aktuators 18 zur Ausbildung einer linearen Verschiebung angesteuert werden (in der vorliegenden Darstellung ist nur ein Aktuator 18 eingezeichnet).

Eine Verschiebung der jeweiligen, parallel zur Längsachse x angeordneten Welle 15 bewirkt eine Verschiebung des Tragerahmens 10 relativ zu dem ortsfesten Zentralkörper 2 um den entsprechenden Längenbetrag entlang der Längsachse x, wobei die parallel zur Längsachse x angeordneten Führungsschlitten 14 in den zugehörigen, ortsfest mit dem Tragerahmen 10 verbundenen Führungsschienen 12 verschoben werden. Die maximal mögliche Längsverschiebung aus der mittleren Position x₀ ist durch Δx gegeben. Analoges gilt für eine Verschiebung parallel zur Querachse y (vgl. FIG. 3). In der vorliegenden Darstellung befindet sich der Tragerahmen 10 in neutraler Position, in welcher die mittlere Position x₁ des Tragerahmens 10 parallel zur Längsachse x sowie die mittleren Positionen y₁ des Tragerahmens 10 parallel zur Querachse y den mittleren Positionen x₀ bzw. y₀ entsprechen (aufgrund dieser Entsprechung sind x₁, y₁ hier nicht dargestellt, vgl. FIG. 3).

FIG. 3 zeigt den Teilausschnitt der Traverse 1 nach FIG. 2, wobei der Tragerahmen 10 aus der neutralen Position verschoben ist, so dass die mittlere Position x₁ (der Seitenverstrebungen 13) des Tragerahmens 10, (die) parallel zur Längsachse x (angeordnet sind), von x₀ verschieden ist, sowie die mittlere Position y₁ (der Seitenverstrebungen 13) des Tragerahmens 10, (die) parallel zur Querachse y (angeordnet sind), von y₀ verschieden ist. Weiterhin dargestellt ist ein Arretierungselement 19, welches zur Arretierung des Tragerahmens 10 in der gezeigten Position vorgesehen ist, und welches den Tragerahmen 10 in der konstanten Position z₀ bzgl. der Hochachse z festklemmt, so dass die Übertragung großer Kräfte von dem Tragerahmen 10 auf den Zentralkörper 2 der Traverse 1, die im Wesentlichen entlang der Hochachse z wirken, möglich sind, ohne dass zunächst die Wellen 15 belastet werden. Zur Ansteuerung des Arretierungselementes 19 ist ein Aktuator 20 eingerichtet. Die weiteren Details der Darstellung entsprechenden denen in FIG. 2 und sind dort zu entnehmen.

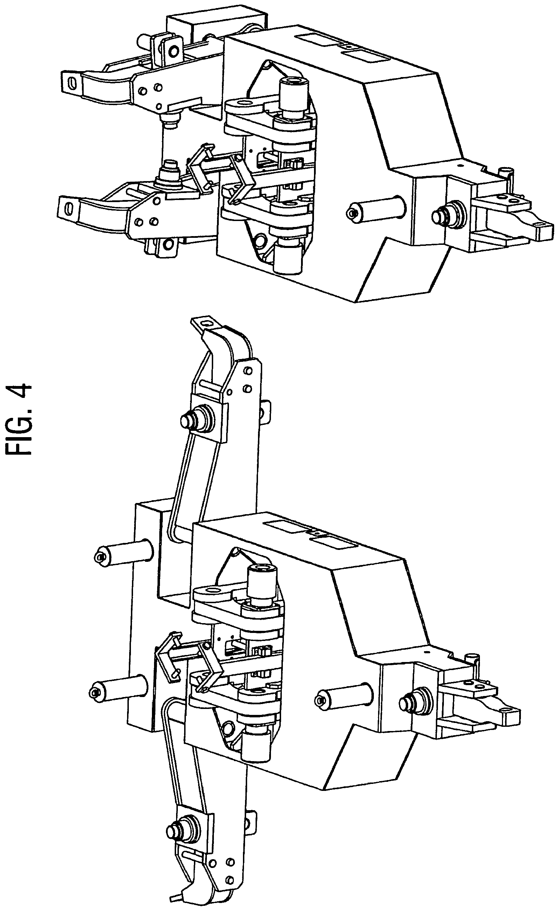

FIG. 4 zeigt in gegenständlicher, perspektiver Ansicht eine mögliche konkrete Ausführung der Traverse 1.

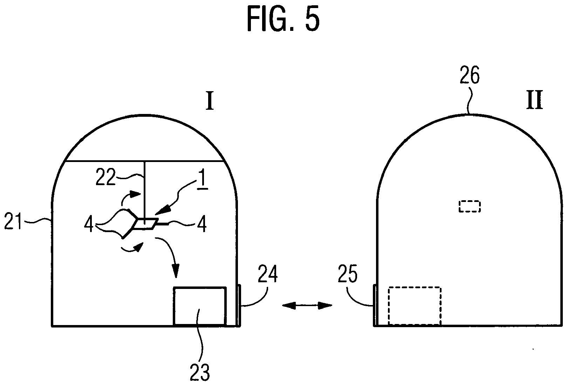

FIG. 5 zeigt eine stark vereinfachte Darstellung von Verfahrensschritten bei der Benutzung der Traverse 1 in einer Mehrblock-Kernkraftanlage. Anfänglich befindet sich die Traverse 1 innerhalb des Containments 21 des links dargestellten Kraftwerkblocks I und dient dort als Anschlagshilfsmittel zur Handhabung eines Reaktordruckbehälter-Deckels (nicht dargestellt). Die Traverse 1 wird dazu an den Kranhaken eines Deckenkrans 22 angehängt. Ihre beiden schwenkbaren Tragarme 4 befinden sich während des Betriebs in einer seitlich ausgeklappten Arbeitsposition. An den Enden der beiden schwenkbaren Tragarme 4 und am Ende des feststehenden Tragarms 4 sind Aufnahme- und Halteelemente angebracht, an denen der Reaktordruckbehälter-Deckel während der Handhabung fixiert werden kann.

Nach vollendeter Wartungsarbeit im Kraftwerksblock I soll eine Wartungsarbeit im rechts dargestellten Kraftwerkblock II durchgeführt werden. Dazu werden die beiden schwenkbaren Tragarme 4 der Traverse 1 in eine kompakte Transportstellung gebracht, die Traverse 1 dann in einen bereit gestellten Transportbehälter 23 abgesenkt, anschließend die Traverse 1 vom Krankhaken gelöst und der Transportbehälter 23 verschlossen. Der Transportbehälter 23 wird durch eine Schleuse 24 aus dem Containment 21 des Kraftwerksblocks I ausgeschleust, zum Kraftwerksblock II transportiert und dort durch eine Schleuse 25 in das Containment 26 eingeschleust. Nach dem Öffnen des Transportbehälters 23 wird die Traverse 1 mit einem Deckenkran (nicht dargestellt) oder dergleichen herausgehoben und durch Ausschwenken der Tragarme 4 in die Arbeitsposition und durch Schwerpunktanpassung mit Hilfe der integrierten Verstellmechanik in erneute Betriebsbereitschaft versetzt.

### Bezugszeichenliste

- 1: Traverse
- 2: Zentralkörper
- 3: Halteelement
- 4: Tragarm
- 5: Seitenaussparung
- 6: Gelenkbolzen
- 7: Verbindungselement
- 8: Aussparung
- 9: Hebevorrichtung
- 10: Tragerahmen
- 11: Halteloch
- 12: Führungsschiene
- 13: Seitenverstrebung
- 14: Führungsschlitten
- 15: Welle
- 16: Lagerblock
- 17: Führungsrohr
- 18: Aktuator
- 19: Arretierungselement
- 20: Aktuator
- 21: Containment
- 22: Deckenkran
- 23: Transportbehälter
- 24: Schleuse
- 25: Schleuse
- 26: Containment

- I: Kraftwerksblock
- II: Kraftwerksblock
- P₀: Mittelpunkt
- x: Längsachse
- y: Querachse
- x₀: mittlere Position bzgl. Längsachse
- y₀: mittlere Position bzgl. Querachse
- x₁: mittlere Position des Tragerahmens bzgl. Längsachse
- y₁: mittlere Position des Tragerahmens bzgl. Querachse

## Patentansprüche

1. Traverse (1) mit einem quaderförmigem Zentralkörper (2), mit einer Mehrzahl von mit dem Zentralkörper (2) verbundenen Halteelementen (3), mit einer Aussparung (8) im mittleren Bereich der Oberseite des Zentralkörpers (2) und mit einem in den Zentralkörper (2) integrierten Tragerahmen (10), wobei der Tragerahmen planparallel zu einer zur Hochachse (z) des Zentralkörpers (2) orthogonalen Ebene an einer festen Position (z₀) bezüglich der Hochachse (z) in dem Zentralkörper (2) angeordnet ist und bezüglich der Längsachse (x) des Zentralkörpers (2) um eine mittlere Position (x₀) längsverschiebbar, und bezüglich der Querachse (y) des Zentralkörpers (2) um eine mittlere Position (y₀) querverschiebbar gelagert ist.

2. Traverse (1) nach Anspruch 1, wobei
• die mittlere Position (x₀) bezüglich der Längsachse (x) und die mittlere Position (y₀) bezüglich der der Querachse (y) im Bereich der Projektionen des Mittelpunktes (P₀) der Aussparung (8) auf die Längsachse (x) bzw. auf die Querachse (y) angeordnet ist, und
• der Tragerahmen (10) zur Ausbildung einer festen Verbindung mit einer Hebevorrichtung (9) mit Haltelöchern (11) versehen ist, welche Hebevorrichtung (9) zur Einführung in die Aussparung (8) entlang der Hochachse (z) vorgesehen ist.

3. Traverse (1) nach Anspruch 1 oder 2, wobei der Tragerahmen (10) bis um eine maximale Längsverschiebung (Δx) aus der mittleren Position (x₀) der Längsachse (x) des Zentralkörpers (2) und bis um eine maximale Querverschiebung (Δy) aus der mittleren Position (y₀) der Querachse (y) des Zentralkörpers (2) verschiebbar gelagert ist.

4. Traverse (1) nach einem der Ansprüche 1 bis 3, wobei an den Seitenverstrebungen (13) des Tragerahmens (10) jeweils parallel zur Längsachse (x) und parallel zur Querachse (y) eine Anzahl von Führungsschienen (12) ausgebildet ist, in welcher oder jeder Führungsschiene (12) mindestens ein Führungsschlitten (14) verschiebbar gelagert ist.

5. Traverse (1) nach Anspruch 4, wobei
• an jeder Seitenverstrebung (13) des Tragerahmens (10) jeweils parallel zur Längsachse (x) und parallel zur Querachse (y) genau eine Führungsschiene (12) ausgebildet ist,
• die parallel zur Längsachse (x) angeordneten Führungsschienen (12) paarweise einander entsprechen und bezüglich der Querachse (y) zueinander gegenüberliegend angeordnet sind,
• die parallel zur Querachse (x) angeordneten Führungsschienen (12) paarweise einander entsprechen und bezüglich der Längsachse (y) zueinander gegenüberliegend angeordnet sind,
• in jeder Führungsschiene (12) ein Führungsschlitten (14) verschiebbar gelagert ist.

6. Traverse (1) nach Anspruch 4 oder 5, wobei jeder Führungsschlitten (14) mit Hilfe einer Welle (15) mit dem Zentralkörper (2) gekoppelt ist, und wobei
• jede Welle (15) in einem Führungsrohr (17) eines Lagerblockes (16) verschiebbar gelagert ist, und
• jede Welle (15) orthogonal zu dem dazugehörigen Führungsschlitten (14) angeordnet ist.

7. Traverse (1) nach Anspruch 6, wobei mindestens eine Welle (15) bezüglich der Längsachse (x) und mindestens eine Welle (15) bezüglich der Querachse (y) mit jeweils einem Aktuator (18) zur Ausbildung einer Verschiebung verbunden ist.

8. Traverse (1) nach einem der Ansprüche 1 bis 7, wobei eine Anzahl von Arretierungselementen (19) vorgesehen sind, um den Tragerahmen (10) in einer Position (x₁) bezüglich der Längsachse (x) und in einer Position (y₁) bezüglich der Querachse (y) innerhalb des Zentralkörpers (2) stabil zu arretieren.

9. Traverse (1) nach Anspruch 8, wobei für das oder jedes Arretierungselement (19) ein Aktuator (20) zur Ansteuerung des oder jeden Arretierungselementes (19) vorgesehen ist.

10. Traverse (1) nach einem der Ansprüche 1 bis 9, wobei eine Anzahl der Halteelemente (3) als klappbare Tragarme (4) ausgebildet sind.

11. Traverse (1) nach Anspruch 10, wobei jeder Tragarm (4) mit einem Gelenkbolzen (6) mit dem Zentralkörper (2) verbunden und jeder Tragarm (4) bezüglich dem Zentralkörper (2) jeweils zwischen einer minimalen Ausfahrposition und einer maximalen Ausfahrposition drehbar gelagert ist.

12. Traverse (1) nach einem der Ansprüche 1 bis 11, wobei mindestens ein Halteelement (3) als ein mit dem Zentralkörper (2) endseitig fest verbundenes Verbindungselement (7) ausgebildet ist.

13. Hubsystem in einer kerntechnischen Anlage, mit einer Traverse (1) nach einem der Ansprüche 1 bis 11.

14. Verfahren zum Betreiben eines Mehrblock-Kernkraftwerks, bei dem eine vorzugsweise nach einem der Ansprüche 1 bis 12 ausgestaltete Traverse (1) zum Anheben eines Reaktordruckbehälter-Deckels bedarfsweise zwischen einem Containment (21) eines ersten Kraftwerksblocks (I) und einem Containment (26) eines zweiten Kraftwerksblocks (II) hin- und hertransportiert und dort jeweils für Hubvorgänge eingesetzt wird, wobei eine Aus- und Einschleusung der Traverse (1) durch das jeweilige Containment (21, 26) hindurch erfolgt.

15. Verfahren nach Anspruch 14, bei dem nach dem Transport der Traverse (1) und vor der erneuten Inbetriebnahme im aktuellen Kraftwerksblock der Schwerpunkt der Traverse (1) über eine integrierte Verstellmechanik neu eingestellt wird.
